# EUROPEAN PATENT SPECIFICATION

(11) **EP 1 534 039 B1**
(45) Date of publication and mention of the grant of the patent: **16.01.2013**
(21) Application number: 04027565.3
(22) Date of filing: 19.11.2004
(51) Int. Cl.: H04L 1/00, H04W 48/08

(54) **Apparatus and method for transmitting and receiving common control information in a wireless communication system**
Gerät und Verfahren zum Senden und Empfangen von gemeinsamen Kontrolleninformationen in einem drahtlosen Kommunikationssystem
Appareil et méthode pour la transmission et la réception d'informations de contrôle communes dans un système de communication sans fil

(30) Priority: 19.11.2003 KR 2003082234; 05.03.2004 KR 2004015212
(43) Date of publication of application: 25.05.2005
(73) Proprietor: Samsung Electronics Co., Ltd., Suwon-si, Gyeonggi-do, 443-742 (KR)
(72) Inventor: Song, Bong-Gee c/o Samsung Electronics Co., Ltd., Suwon-si Gyeonggi-do (KR); Park, Yun-Sang c/o Samsung Electronics Co., Ltd., Suwon-si Gyeonggi-do (KR); Eom, Kwang-Seop c/o Samsung Electronics Co., Ltd., Suwon-si Gyeonggi-do (KR); Hong, Seung-Eun c/o Samsung Electronics Co., Ltd., Suwon-si Gyeonggi-do (KR); Cho, Min-Hee c/o Samsung Electronics Co., Ltd., Suwon-si Gyeonggi-do (KR); Ju, Hyeong-Jong c/o Samsung Electronics Co., Ltd., Suwon-si Gyeonggi-do (KR); Cho, Jae-Hee c/o Samsung Electronics Co., Ltd., Suwon-si Gyeonggi-do (KR)
(74) Representative: Grünecker, Kinkeldey, Stockmair & Schwanhäusser

(56) References cited:
- WO-A-00/76114
- WO-A-98/37713
- US-A1- 2002 032 030

## Description

### BACKGROUND OF THE INVENTION

### 1. Field of the Invention

The present invention relates generally to a wireless communication system, and in particular, to an apparatus and method for transmitting and receiving common control information applied in common to subscriber stations.

### 2. Description of the Related Art

In a 4^{th} generation (4G) communication system, which is a next generation communication system, active research is being conducted on technology for providing users with services guaranteeing various Qualities-of-Service (QoSs) at a high data rate. A current 3^{rd} generation (3G) communication system generally supports a data rate of about 384 Kbps in an outdoor channel environment having a relatively poor channel environment, and supports a data rate of a maximum of 2 Mbps in an indoor channel environment having a relatively good channel environment.

Additionally, a Wireless Local Area Network (LAN) communication system and a Wireless Metropolitan Area Network (MAN) communication system generally support a data rate of 20 to 50 Mbps. Therefore, in the current 4G communication system, active research is being carried out on a new communication system securing mobility and QoS for the Wireless LAN communication system and the Wireless MAN communication system supporting a relatively high data rate in order to support a high-speed service.

The Wireless MAN communication system, more specifically, a Broadband Wireless Access (BWA) communication system, has wider coverage and supports a higher data rate, compared with the Wireless LAN communication system. An Institute of Electrical and Electronics Engineers (IEEE) 802.16a communication system utilizes Orthogonal Frequency Division Multiplexing (OFDM) scheme and/or Orthogonal Frequency Division Multiple Access (OFDMA) scheme to support a broadband transmission network for a physical channel of the Wireless MAN communication system. The IEEE 802.16a communication system is a BWA communication system using OFDM/OFDMA scheme.

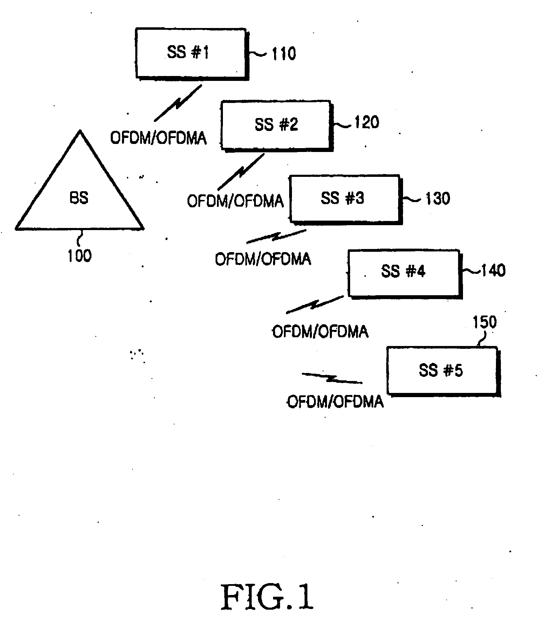

FIG. 1 is a diagram schematically illustrating a conventional IEEE 802.16a communication system. Referring to FIG. 1, the IEEE 802.16a communication system has a single-cell configuration, and includes a base station (BS) 100 and a plurality of subscriber stations (SSs), i.e., a first subscriber station(SS#1) 110, a second subscriber station(SS#2) 120, a third subscriber station(SS#3) 130, a fourth subscriber station(SS#4) 140, and a fifth subscriber station(SS#5) 150, which are controlled by the base station 100. Signal exchange between the base station 100 and the subscriber stations 110, 120, 130, 140, and 150 is performed using OFDM/OFDMA scheme.

As illustrated in FIG. 1, the subscriber stations 110, 120, 130, 140, and 150 are different distances from the base station 100, and generally, radio wave environments, i.e., channel states, of the subscriber stations 110, 120, 130, 140, and 150 are different according to the distances from the base station 100. That is, the first subscriber station 110, which is the shortest distance from the base station 100, has the best channel state, and the fifth subscriber station 150, which has the longest distance from the base station 100, has the worst channel state.

In FIG. 1, the channel states will be distinguished into 5 states: 'best' state, 'good' state, 'normal' state, 'bad' state, and 'worst' state. Here, a criterion for distinguishing the 5 channel states is based on a threshold for distinguishing channel states provided in the IEEE 802.16a communication system. However, an operation of distinguishing channel states according to the threshold is not directly related to the present invention. Therefore, a detailed description thereof will be omitted herein.

In addition, although the channel states between the base station 100 and the subscriber stations 110, 120, 130, 140, and 150 are affected by the distances therebetween, and also by the obstacles existing between the base station 100 and the subscriber stations 110, 120, 130, 140 and 150, or interferences caused by other signals, it is assumed in FIG. 1 that the channel states are affected by the distances from the base station 100.

The current wireless communication system uses a burst characteristic of packet data in allocating radio resources for transmission of the packet data. In the following description, the wireless communication system refers to the IEEE 802.16a communication system.

Generally, in transmitting circuit data, the IEEE 802.16a communication system allocates a dedicated channel to a target subscriber station of the circuit data, and transmits the circuit data over the allocated dedicated channel. That is, for transmission of circuit data, the IEEE 802.16a communication system allocates a dedicated radio resource to a subscriber station, and transmits the circuit data over the allocated dedicated radio resource.

However, in transmitting packet data, the IEEE 802.16a communication system allocates a shared resource, i.e., a shared channel, rather than allocating the dedicated resource considering efficiency of radio resources, and transmits the packet data over the allocated shared channel. Therefore, a base station dynamically allocates downlink and uplink resources for each of its subscriber stations using a scheduling operation, and provides information on the allocated downlink and uplink resources to each of the subscriber stations in the form of common control information (CCI) every frame.

In addition, the IEEE 802.16a communication system modulates and codes a signal to be transmitted to a particular subscriber station using modulation and coding scheme appropriate for a radio ware environment, i.e., a channel state, of the subscriber station.

WO 98/37713 A presented a system and method for providing a high-level modulation packet control channel and a high-level modulation packet traffic channel in a second generation (2G) mobile phone system, giving D-AMPS+ mobile stations the possibility to select between said high level modulation channels and a low-level modulation packet control channel and a low-level modulation packet traffic channel depending on channel state, whereas D-AMPS enhanced mobile stations could only select said low-level modulation channels.

As described above, the channel states of a base station and subscriber stations are affected by various factors. Therefore, an Adaptive Modulation and Coding (AMC) scheme has been proposed as a scheme for transmitting a signal using different modulation and coding scheme according to the channel states between the base station and the subscriber stations. That is, the AMC scheme is a signal transmission scheme for selecting different modulation schemes and coding schemes according to channel states between a cell, or a base station, and subscriber stations, thereby improving efficiency of an entire cell.

The AMC scheme has a plurality of modulation schemes and a plurality of coding schemes, and modulates/codes a channel signal with a combination of the modulation schemes and coding schemes. Commonly, each of the combinations of the modulation schemes and coding schemes is called "MCSs," and it is possible to defme a plurality of MCSs of level 1 to level N according to the number of MCSs. More specifically, the AMC scheme is a scheme for adaptively selecting an MCS level according to the channel states between the base station and the subscriber stations, thereby improving efficiency of the entire base station system.

As described above, the IEEE 802.16a communication system controls signal exchange between a base station and subscriber stations according to a channel state of each of the subscriber stations using the AMC scheme. However, because common control information such as system information (SI) and resource allocation information should be received in common by all subscriber stations serviced by the base station, the base station must transmit the common control information with the most robust MCS level so that even the subscriber station having the worst channel state can normally receive the common control information.

For example, MCS levels provided in the IEEE 802.16a communication system are shown in Table 1.

**Table 1**

| MCS level index | Robust | Resource Efficiency (Info bits/Tx bits) |
|---|---|---|
| 0 | Very Robust | Lowest |
| 1 | Robust | Low |
| 2 | Normal | Normal |
| 3 | Weak | High |
| 4 | Very Weak | Highest |

As shown in Table 1, the IEEE 802.16a communication system provides 5 MCS levels, level 0 to level 4, and as an index of the MCS level increases, a channel state becomes better. In contrast, as an index of the MCS level decreases, a channel state becomes worse. That is, for MCS level = 0, a modulation scheme having the lowest modulation order and a coding scheme having the lowest coding rate are used, thereby minimizing resource efficiency. However, for MCS level = 4, a modulation scheme having the highest modulation order and a coding scheme having the highest coding rate are used, thereby maximizing resource efficiency.

In addition, MCS parameters corresponding to the MCS levels are included in a Downlink Channel Descriptor (DCD) message in the case of a downlink, and included in an Uplink Channel Descriptor (UCD) message in the case of an uplink. The IEEE 802.16a communication system uses the MCS level index as a Downlink Interval Usage Code (DIUC) and an Uplink Interval Usage Code (UIUC) for the uplink and downlink. In addition, when the channel state is bad, it is necessary to insert additional bits to increase a signal reception rate.

An increase in number of the additionally inserted bits increases the reception rate but decreases resource efficiency (= number of information bits /number of transmission bits). In the IEEE 802.16a communication system, in order to guarantee a predetermined reception rate, the number of bits that should be additionally inserted according to a channel state is previously determined.

Referring to FIG. 1, because the first subscriber station 110 has the best channel state, although the base station 100 may select any one of the 5 MCS levels in transmitting a signal, the first subscriber station 110 can receive the signal without error. However, the base station 100 selects the MCS level 4 among the 5 MCS levels in transmitting a signal to the first subscriber station 110, taking resource efficiency into consideration. However, because the fifth subscriber station 150 has the worst channel state, the base station 100 should select the MCS level 0, which is the most robust MCS level in transmitting a signal to the fifth subscriber station 150, such that the fifth subscriber station 150 can normally receive the signal.

In order to perform communication between a base station and a subscriber station, the base station and the subscriber station should exchange signals using the same MCS level. If an MCS level used in the base station is different from an MCS level used in the subscriber station, normal signal exchange between the base station and the subscriber station cannot be achieved. A process of exchanging information on a determined MCS level between the base station and the subscriber station is not directly related to the present invention, therefore, a detailed description thereof will be omitted herein.

As described above, because the common control information should be received in common by all subscriber stations of the first subscriber station 110 to the fifth subscriber station 150 serviced by the base station 100, the base station 100 should transmit the common control information with the MCS level 0, which is the most robust MCS level, so that even the subscriber station having the worst channel state, i.e., the fifth subscriber station 150, among the first to fifth subscriber stations 110 to 150 can normally receive the common control information.

Before a description of the common control information is given, it will be assumed herein that a downlink MAP (DL_MAP) message and an uplink MAP (UL_MAP) message of the IEEE 802.16a communication system are examples of the common control information. Information elements (IEs) included in the DL_MAP message are shown in Table 2.

**Table 2**

| | Syntax | Size |
|---|---|---|
| Management Message Type=2 | | 8 bits |
| PHY Synchronization Field | | PHY dependent |
| DCD Count | | 16 bits |
| Base Station ID | | 48 bits |

| Number of DL-MAP Information Elements n | | Variable |
|---|---|---|
| for(i=1;i<=n;i++) { | | |
| | DIUC | 4 bits |
| | Location Information | PHY dependent |
| } | | |

As shown in Table 2, the DL_MAP message includes a plurality of IEs, i.e., a Management Message Type indicating a type of a transmission message, a PHY (Physical) Synchronization Field established according to a modulation scheme and a demodulation scheme applied to a physical channel to acquire synchronization, a DCD Count indicating a count corresponding a variation in configuration of a Downlink Channel Descript message including a downlink burst profile, a Base Station ID indicating a base station identifier, a Number of DL_MAP Elements n indicating the number of elements following the Base Station ID, DIUC, or an MCS level index for an allocated radio resource block, and a Location Information indicating location information of the radio resource block.

IEs included in the UL_MAP message are shown in Table 3.

**Table 3**

| Syntax | | Size |
|---|---|---|
| Management Message Type=3 | | 8 bits |
| Uplink Channel ID | | 16 bits |
| UCD Count | | 16 bits |
| Number of UL-MAP Elements n | | Variable |
| Allocation Start Time | | 32 bits |
| for(i=1;i<=n;i++) { | | |
| | CID | 16 bits |
| | UIUC | 4 bits |
| | Location Info. | PHY dependent |
| } | | |

As shown in Table 3, the UL_MAP message includes a plurality of IEs, i.e., a Management Message Type indicating a type of a transmission message, an Uplink Channel ID indicating an uplink channel ID in use, a UCD Count indicating a count corresponding to a variation in configuration of a UCD message including an uplink burst profile, a Number of UL_MAP Elements n indicating the number of elements following the UCD Count, an Allocation Start Time indicating uplink resource allocation time information, UIUC, or an MCS level index for an allocated radio resource block, a Location Information indicting location information of the radio resource block, and a CID indicating a Connection ID of a subscriber station that will use the allocated radio resource block.

Because the DL_MAP message and the UL_MAP message are common control information, the base station 100 transmits the DL_MAP message and the UL_MAP message using the MCS level 4, which is the most robust MCS level, so that the first to fifth subscriber stations 110 to 150 all can normally receive the DL_MAP message and the UL_MAP message. However, the common control information, i.e., the DL_MAP message and the UL_MAP message, includes the information that the first to fifth subscriber stations 110 to 150 all should receive in common, an MCS level index for a radio resource block allocated by the base station 100, and location information of the radio resource block.

That is, in the DL_MAP message, PHY Synchronization, Downlink Channel Descript information, DCD Count, Base Station ID, and Number of DL_MAP Information Elements n are the information that the first to fifth subscriber stations 110 to 150 all should receive in common, but DIUC and Location Information are not the information that the first to fifth subscriber stations 110 to 150 all should receive in common, but the information that only a corresponding subscriber station should receive. In the UL_MAP message, Uplink Channel ID, UCD Count, Number of UL_MAP Elements n, and Allocation Start Time are the information that the first to fifth subscriber stations 110 to 150 all should receive in common, but CID, UIUC and Location Information are not the information that the first to fifth subscriber stations 110 to 150 all should receive in common, but the information that only a corresponding subscriber station should receive.

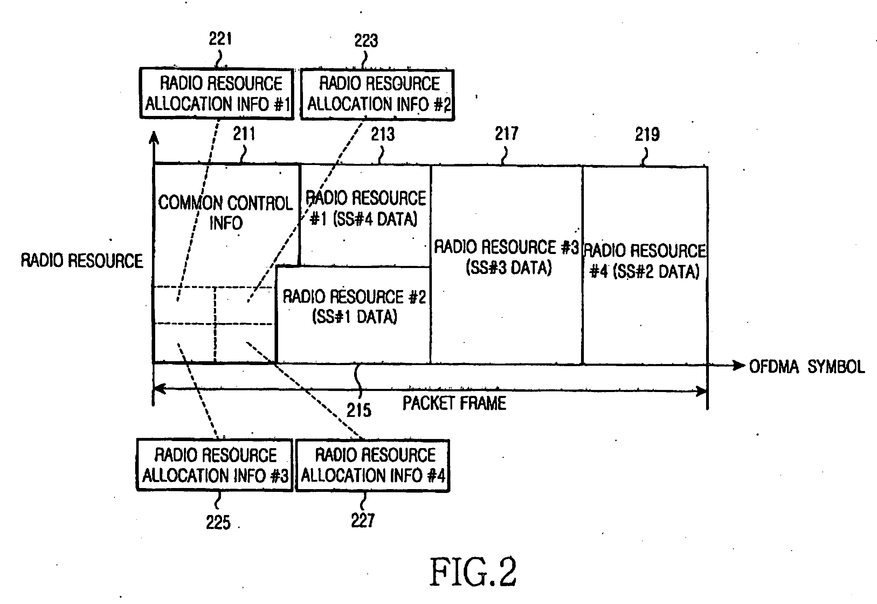

FIG. 2 is a diagram schematically illustrating application of AMC in a conventional IEEE 802.16a communication system. Before a description of FIG. 2 is given, it will be assumed that the IEEE 802.16a communication system is identical in configuration to the IEEE 802.16a communication system described with reference to FIG. 1. As illustrated in FIG. 2, the base station 100 transmits common control information 211 using the MCS level 0, transmits a first radio resource 213 including data targeting the fourth subscriber station 140 using the MCS level 1, transmits a second radio resource 215 including data targeting the first subscriber station 110 using the MCS level 4, transmits a third radio resource 217 including data targeting the third subscriber station 130 using the MCS level 2, and transmits a fourth radio resource 219 including data targeting the second subscriber station 120 using the MCS level 3. The common control information 211, i.e., the DL_MAP message and the UL_MAP message, includes information on the allocated radio resources, i.e., allocation information for the first to fourth radio resources 213 to 219, and although the allocation information for the first to fourth radio resources 213 to 219 can only be received by corresponding subscriber stations, because it is included in the common control information 211, the base station 100 transmits the allocation information for the first to fourth radio resources 213 to 219 using the MCS level 0, which is the most robust MCS level.

For example, as illustrated in FIG. 2, the base station 100 is allowed to transmit information (i.e., DIUC and Location Information) on a downlink radio resource block targeting only the first subscriber station 110 and information (i.e., CID, UIUC, and Location Information) on an uplink radio resource block in the common control information, i.e., the DL_MAP message and the UL_MAP message, using the MCS level 4, but the base station 100 transmits the information (i.e., DIUC and Location Information) on a downlink radio resource block targeting only the first subscriber station 110 and the information (i.e., CID, UIUC, and Location Information) on an uplink radio resource block using the MCS level 0 because they are also common control information.

As a result, the information (i.e., DIUC and Location Information) on a downlink radio resource block targeting only the first subscriber station 110 and the information (i.e., CID, UIUC, and Location Information) on an uplink radio resource block are transmitted using unnecessarily robust modulation and coding, causing a signaling overhead. Although the information targeting only the first subscriber station 110 has been described by way of example, the information for targeting only any one of the second to fourth subscriber stations 120 to 140 also causes a signaling overhead. As described above, transmitting the common control information using the most robust MCS level undesirably reduces resource efficiency.

### SUMMARY OF THE INVENTION

It is, therefore, an object of the present invention to provide an apparatus and method for transmitting and receiving common control information in a wireless communication system.

It is another object of the present invention to provide an apparatus and method for transmitting and receiving common control information by adaptively selecting AMC according to a characteristic of the common control information in a wireless communication system.

It is further another object of the present invention to provided a common control information transmission and reception apparatus and method for maximizing resource efficiency in a wireless communication system.

In accordance with a first aspect of the present invention, there is provided a method for transmitting common control information messages from a base station to a plurality of subscriber stations located in a coverage area of the base station in a wireless communication system. The method comprises the steps of transmitting a first common control information message that is commonly transmitted in common to all of the plurality of subscriber stations; and transmitting a plurality of second common control information messages that are individually transmitted to a plurality of groups, wherein the plurality of groups are generated by classifying the plurality of subscriber stations into the plurality of groups using channel states thereof, a second common control information message with lower coding rate and modulation order than other second common control information messages is placed before the other second common control information messages, and a different modulation order and a different coding rate is applied to each of the plurality of second common control information messages.

In accordance with a second aspect of the present invention, there is provided an apparatus for transmitting common control information messages in a wireless communication. The apparatus comprises a plurality of subscriber stations; and a base station for transmitting a first common control information message that is commonly transmitted in common to all of the plurality of subscriber stations, and transmitting a plurality of second common control information messages that are individually transmitted to a plurality of groups, wherein the plurality of groups are generated by classifying the plurality of subscriber stations into the plurality of groups using channel states thereof, a second common control information message with lower coding rate and modulation order than other second common control information messages is placed before the other second common control information messages, and a different modulation order and a different coding rate is applied to each of the plurality of second common control information messages.

In accordance with a third aspect of the present invention, there is provided a method for receiving common control information messages transmitted from a base station to a plurality of subscriber stations located in a coverage area of the base station in a wireless communication. The method comprises the steps of receiving, from the base station, a first common control information message that is commonly transmitted, in the base station, in common to all of the plurality of subscriber stations; and receiving, from the base station, a plurality of second common control information messages that are individually transmitted, in the base station, to a plurality of groups, wherein the plurality of groups are generated, in the base station, by classifying the plurality of subscriber stations into the plurality of groups using channel states thereof, a second common control information message with lower coding rate and modulation order than other second common control information messages is placed before the other second common control information messages, and a different modulation order and a different coding rate is applied to each of the plurality of second common control information messages.

In accordance with a fourth aspect of the present invention, there is provided an apparatus for receiving common control information messages in a wireless communication. The apparatus comprises a base station; and a plurality of subscriber stations for receiving, from the base station, a first common control information message that is commonly transmitted, in the base station, in common to all of the plurality of subscriber stations, and receiving, from the base station, a plurality of second common control information messages that are individually transmitted, in the base station, to a plurality of groups, wherein the plurality of groups are generated, in the base station, by classifying the plurality of subscriber stations into the plurality of groups using channel states thereof, a second common control information message with lower coding rate and modulation order than other second common control information messages is placed before the other second common control information messages, and a different modulation order and a different coding rate is applied to each of the plurality of second common control information messages.

### BRIEF DESCRIPTION OF THE DRAWINGS

The above and other objects, features, and advantages of the present invention will become more apparent from the following detailed description when taken in conjunction with the accompanying drawings in which:
FIG. 1 is a diagram schematically illustrating a conventional IEEE 802.16a communication system;
FIG. 2 is a diagram schematically illustrating application of an AMC scheme in a conventional IEEE 802.16a communication system;
FIG. 3 is a diagram schematically illustrating application of an AMC scheme in an IEEE 802.16a communication system according to an embodiment of the present invention;
FIG. 4 is a diagram schematically illustrating a transmitter for an IEEE 802.16a communication system according to the present invention;
FIG 5 is a diagram schematically illustrating a receiver in an IEEE 802.16a communication system according to the present invention;
FIG. 6 is a flowchart illustrating a process of transmitting common control information in an IEEE 802.16a communication system according to the present invention;
FIG. 7 is a flowchart illustrating a process of receiving common control information in an IEEE 802.16a communication system according to the present invention;
FIG. 8 is a diagram illustrating a frame format for an IEEE 802.16a communication system according to the present invention; and
FIG. 9 is a diagram schematically illustrating application of AMC scheme in an IEEE 802.16a communication system according to the present invention.

### DETAILED DESCRIPTION OF THE PREFERRED EMBODIMENT

Several preferred embodiments of the present invention will now be described in detail herein below with reference to the annexed drawings. In the drawings, the same or similar elements are denoted by the same reference numerals even though they are depicted in different drawings. Additionally, in the following description, a detailed description of known functions and configurations incorporated herein has been omitted for conciseness.

The present invention proposes an apparatus and method for increasing resource efficiency by transmitting common control information (CCI) that all subscriber stations (SSs) should commonly receive according to a characteristic of the common control information and channel states of the subscriber stations, using an Adaptive Modulation and Coding (AMC) scheme in a wireless communication system.

In the following description, an Institute of Electrical and Electronics Engineers (IEEE) 802.16a communication system defined by applying an Orthogonal Frequency Division Multiplexing (OFDM) scheme and/or an Orthogonal Frequency Division Multiple Access (OFDMA) scheme to a Metropolitan Area Network (MAN) communication system, which is a Broadband Wireless Access (BWA) communication system, is used as an example of the wireless communication system.

As described above, the AMC scheme is a scheme for transmitting a signal using different Modulation and Coding Schemes (MCSs) according to channel states between a base station (BS) and subscriber stations. That is, the AMC scheme is a signal transmission scheme for selecting different modulation scheme and coding schemes according to channel states between a cell, or a base station, and subscriber stations, thereby improving efficiency of the entire cell. The AMC scheme has a plurality of modulation schemes and a plurality of coding schemes, and modulates/codes a channel signal with a combination of the modulation schemes and coding schemes. Commonly, each of the combinations of the modulation schemes and coding schemes is called "MCS," and it is possible to defme a plurality of MCSs of level 1 to level N according to the number of MCSs. More specifically,The AMC scheme is a scheme for adaptively selecting an MCS level according to the channel states between the base station and the subscriber stations, thereby improving efficiency of the entire base station system.

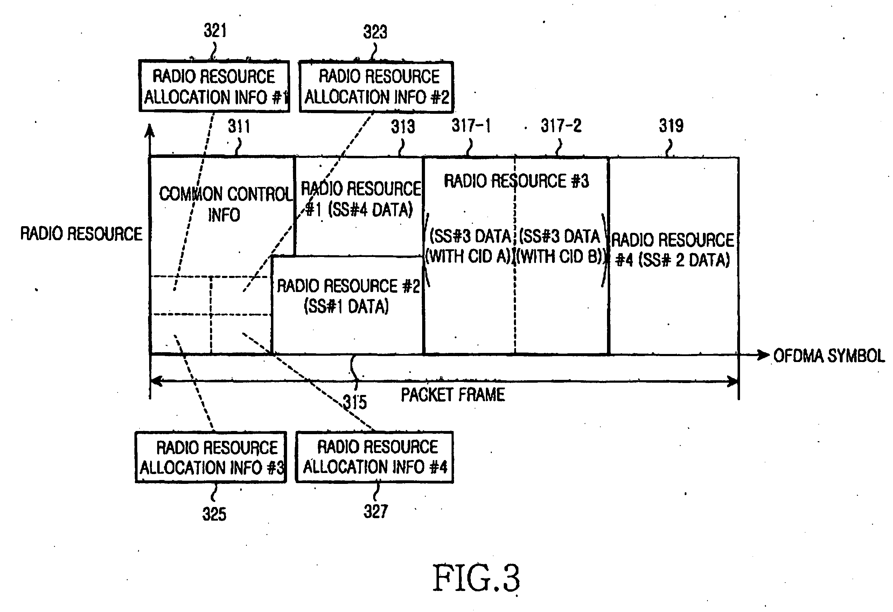

FIG. 3 is a diagram schematically illustrating application of the AMC scheme in the IEEE 802.16a communication system according to the present invention. Before a description of FIG. 3 is given, it will be assumed that the IEEE 802.16a communication system is identical in configuration to the IEEE 802.16a communication system described with reference to FIG. 1, except that one subscriber station, i.e., a sixth subscriber station (not shown), is located in the same place as the third subscriber station 130.

As described with reference to FIG. 1, the first subscriber station 110 having the shortest distance from the base station 100 has the best channel state, and the fifth subscriber station 150 having the longest distance from the base station 100 has the worst channel state. In addition, as described with reference to FIG. 1, the channel states will be distinguished into 5 states: 'best' state, 'good' state, 'normal' state, 'bad' state, and 'worst' state. In addition, it will be assumed that the IEEE 802.16a communication system has 5 MCS levels of an MCS level 0 to an MCS level 4 as described with reference to Table 1.

The common control information can include the downlink MAP (DL_MAP) message and the uplink MAP (UL_MAP) message described with reference to Table 2 and Table 3, or a Hybrid Automatic Retransmission Request MAP (HARQ_MAP) message. The HARQ_MAP message includes a compact DL_MAP message and a compact UL_MAP message including some of the information elements (IEs) included in the DL_MAP message and the UL_MAP message. The IEs included in the compact DL_MAP message and the compact UL_MAP message are not directly related to the present invention, and a detailed description thereof will be omitted herein.

As described above, in the DL_MAP message, PHY (Physical) Synchronization established according to a modulation scheme and a demodulation scheme applied to a physical channel to acquire synchronization, Downlink Channel Descriptor (DCD) information, DCD Count indicating a count corresponding a variation in configuration of a DCD message including a downlink burst profile, Base Station ID indicating a base station identifier, and Number of DL_MAP Elements n indicating the number of elements following the Base Station ID are the information that all subscriber stations serviced by the base station 100 should receive in common, but DIUC (Downlink Interval Usage Code), or an MCS level index for an allocated radio resource block, and Location Information indicating location information of the radio resource block are not the information that all of the subscriber stations should receive in common, rather the information that only a corresponding subscriber station should receive.

In the UL_MAP message, an Uplink Channel ID indicating an uplink channel ID in use, a UCD Count indicating a count corresponding to a variation in configuration of a UCD (Uplink Channel Descriptor) message including an uplink burst profile, a Number of UL_MAP Elements n indicating the number of elements following the UCD Count, and an Allocation Start Time indicating uplink resource allocation time information are the information that all of the subscriber stations should receive in common, but UIUC (Uplink Interval Usage Code), or an MCS level index for an allocated radio resource block, Location Information indicting location information of the radio resource block, and CID(Connection ID(IDentifier) indicating a Connection ID of a subscriber station that will use the allocated radio resource block are not the information that all of the subscriber stations should receive in common, but the information that only a corresponding subscriber station should receive. The HARQ_MAP message is not the information that all of the subscriber stations should receive in common, but the information that only corresponding subscriber stations, i.e., subscriber station having the same channel state, should receive.

Referring to FIG. 3, in transmitting common control information 311, the base station 100 transmits the information that all subscriber stations serviced by the base station 100 should receive in common, using the MCS level 0, which is the most robust MCS level, and transmits the information that only a corresponding subscriber station should receive, using an MCS level determined according to a channel state of the corresponding subscriber station. An operation of allocating an MCS level for the information that only a corresponding subscriber station should receive, in the common control information 311, will be described afterward.

The base station 100 transmits a first radio resource 313 including data targeting the fourth subscriber station 140 using the MCS level 1, and transmits a second radio resource 315 including data targeting the first subscriber station 110 using the MCS level 4. Further, the base station 100 transmits a third radio resource 317 including data targeting the third subscriber station 130 and the sixth subscriber station using the MCS level 2, and transmits a fourth radio resource 319 including data targeting the second subscriber station 120 using the MCS level 3. Herein, the third radio resource 317 includes a part allocated to the third subscriber station 130 and the other part allocated to the sixth subscriber station, such that it is transmitted together with a CID for identifying a target of the data.

The base station 100 selects an MCS level according to a channel state of a corresponding subscriber station for the information that only the corresponding subscriber station should receive, in the common control information 311. However, because even the information that only the corresponding subscriber station should receive should be guaranteed to have higher reliability than that of normal data other than the control information, the present invention transmits the corresponding information using an MCS level that is lower by 1 level than an MCS level corresponding to a channel state of the corresponding subscriber station. Alternatively, the base station 100 can transmit the information using an MCS level corresponding to a channel state of the corresponding subscriber station. In this case, only the reliability is lowered as compared with when the base station 100 transmits the information using the 1-level-lower MCS level.

The base station 100 transmits first radio resource allocation information 321, which is to be transmitted only to the fourth subscriber station 140, using the MCS level 0, transmits second radio resource allocation information 323, which is to be transmitted only to the first subscriber station 110, using the MCS level 3, transmits third radio resource allocation information 325, which is to be transmitted only to the third subscriber station 130 and the sixth subscriber station, using the MCS level 1, and transmits fourth radio resource allocation information 327, which is to be transmitted only to the second subscriber station 120, using the MCS level 2.

That is, the present invention classifies a characteristic of the common control information 311 according to whether all subscriber stations should receive it or only a corresponding subscriber station should receive it. The present invention transmits the information that all subscriber stations should receive, using the most robust MCS level, i.e., the MCS level 0, and transmits the information that only a corresponding subscriber station should receive, using an MCS level which is lower by a predetermined level, for example, 1 level, than an MCS level corresponding to a channel state of the corresponding subscriber station, thereby increasing both reliability and resource efficiency.

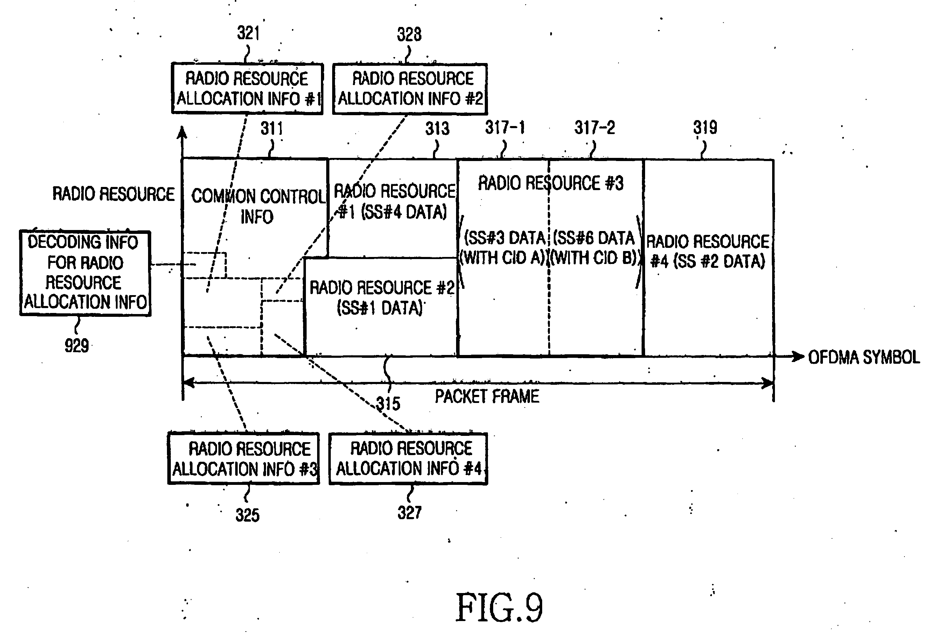

FIG. 9 is a diagram schematically illustrating application of AMC in the IEEE 802.16a communication system according to another embodiment of the present invention. Before a description of FIG. 9 is given, it will be assumed that the IEEE 802.16a communication system is identical in configuration to the IEEE 802.16a communication system described with reference to FIG. 3. That is, as described with reference to FIG. 3, the first subscriber station 110 having the shortest distance from the base station 100 has the best channel state, and the fifth subscriber station 150 having the longest distance from the base station 100 has the worst channel state. Also, the sixth subscriber station is located in the same place where the third subscriber station 130 is located, as described with reference to FIG. 3.

The first embodiment of the present invention has not separately prescribed the information that all subscriber stations should receive in common, in the common control information. However, in order for subscriber stations to normally receive radio resource information, which is allocation information for radio resources allocated to the corresponding subscriber stations, decoding information for normally decoding the radio resource allocation information should be included in the common control information. Additionally, because the radio resource allocation information is coded according to an MCS level determined depending on a channel state of a corresponding subscriber station, a size and location of the radio resource allocation information is different for respective subscriber stations. Therefore, the base station should inform the subscriber station of the size and location of the radio resource allocation information through the common control information. The subscriber station reads the decoding information and decodes the radio resource allocation information with an MCS level corresponding to the size and location of the corresponding radio resource allocation information. Herein, the term "decoding information" for the radio resource allocation information refers to an MCS level and size and location information of radio resource allocation information corresponding to the MCS level.

Referring to FIG. 9, the second embodiment of the present invention is almost identical to the first embodiment of the present invention in method of using AMC, except that the decoding information 929 for the radio resource allocation information is added to the common control information 311 described in connection with FIG. 3. As described above, because MCS levels actually used for radio resource information are different, the first and second embodiments are different only in that sizes or locations of the first radio resource allocation information 321 to the fourth radio resource allocation information 327 are different. Therefore, a detailed description of the same parts as those illustrated in FIG. 3 will be omitted herein.

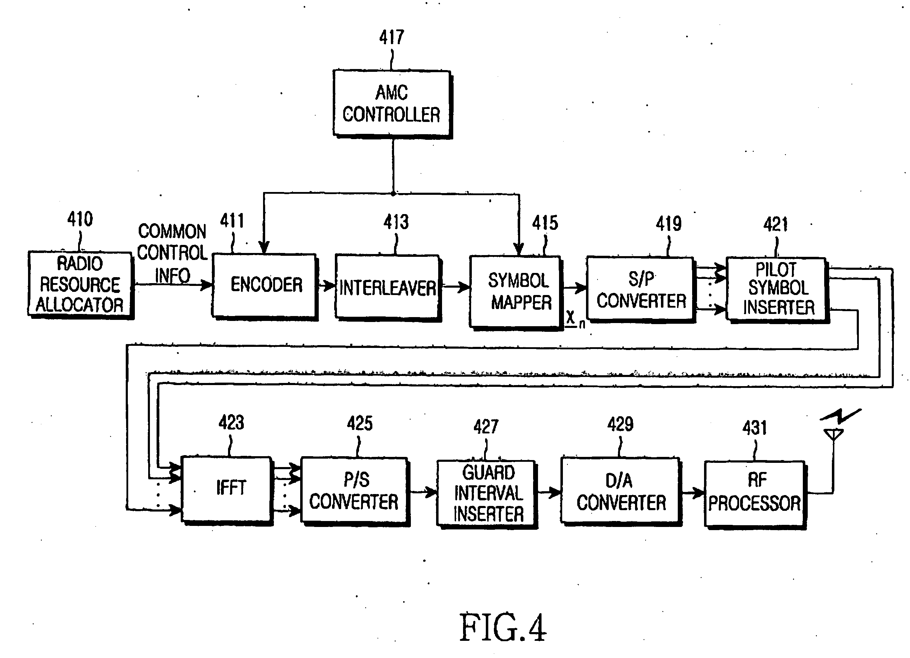

FIG. 4 is a diagram schematically illustrating a structure of a transmitter for the IEEE 802.16a communication system according to the present invention. Referring to FIG. 4, the transmitter, or a base station, includes a radio resource allocator 410, an encoder 411, an interleaver 413, a symbol mapper 415, an AMC controller 417, a serial-to-parallel (S/P) converter 419, a pilot symbol inserter 421, an inverse fast Fourier transform (IFFT) unit 423, a parallel-to-serial (P/S) converter 425, a guard interval inserter 427, a digital-to-analog (D/A) converter 429, and a radio frequency (RF) processor 431.

The radio resource allocator 410 allocates downlink and uplink resources for receivers, or subscriber stations, generates common control information according to the allocated downlink and uplink resources, and outputs the generated common control information to the encoder 411. A process of allocating downlink and uplink resources for the subscriber stations by the radio resource allocator 410 is not directly related to the present invention, and a detailed description thereof will be omitted. The encoder 411 codes the common control information using a coding scheme controlled by the AMC controller 417, and outputs the coded common control information to the interleaver 413.

The AMC controller 417 selects a coding scheme corresponding to the most robust MCS level for the information that all subscriber stations should receive, in the common control information, and selects a coding scheme corresponding to an MCS level, which is lower by 1 level than an MCS level corresponding to a channel state of a corresponding subscriber station for the information that only the corresponding subscriber station should receive, in the common control information. For example, it is assumed herein that the coding scheme is a coding rate. The interleaver 413 interleaves the coded common control information using a predetermined interleaving scheme, and outputs the interleaved common control information to the symbol mapper 415. Herein, a random interleaving scheme can be used for the interleaving scheme.

The symbol mapper 415 modulates coded bits output from the interleaver 413 into modulation symbols using a modulation scheme controlled by the AMC controller 417, and outputs the modulation symbols to the serial-to-parallel converter 419. Herein, Quadrature Phase Shift Keying (QPSK) or 16-ary Quadrature Amplitude Modulation (16QAM) can be used for the modulation scheme, and the AMC controller 417 selects a modulation scheme corresponding to the most robust MCS level for the information that all subscriber stations should receive, in the common control information, and selects a modulation scheme corresponding to an MCS level which is lower by 1 level than an MCS level corresponding to a channel state of a corresponding subscriber station for the information that only the corresponding subscriber station should receive, in the common control information.

The serial-to-parallel converter 419 parallel-converts serial modulation symbols output from the symbol mapper 415, and outputs the parallel-converted modulation symbols to the pilot symbol inserter 421. The pilot symbol inserter 421 inserts pilot symbols into the parallel-converted modulation symbols output from the serial-to-parallel converter 419, and outputs the pilot-inserted modulation symbols to the IFFT unit 423.

The IFFT unit 423 performs N-point IFFT on the signals output from the pilot symbol inserter 421, and outputs the IFFT-processed signals to the parallel-to-serial converter 425. The parallel-to-serial converter 425 serial-converts the signals output from the IFFT unit 423, and outputs the serial-converted signal to the guard interval inserter 427. The guard interval inserter 427 inserts a guard interval signal into the signal output from the parallel-to-serial converter 425, and outputs the guard interval-inserted signal to the digital-to-analog converter 429. The guard interval is inserted to remove interference between an OFDM symbol transmitted at a previous time and an OFDM symbol transmitted at a current time. The guard interval signal is inserted in a cyclic prefix scheme or a cyclic prefix scheme. In the cyclic prefix scheme, a predetermined number of last samples of an OFDM symbol in a time domain are copied and inserted into a valid OFDM symbol, and in the cyclic postfix scheme, a predetermined number of first samples of an OFDM symbol in a time domain are copied and inserted into a valid OFDM symbol.

The digital-to-analog converter 429 analog-converts the signal output from the guard interval inserter 427, and outputs the analog-converted signal to the RF processor 431. The RF processor 431, including a filter and a front-end unit, RF-processes the signal output from the digital-to-analog converter 429, such that the signal can be actually transmitted over the air, and transmits the RF-processed signal over the air via a transmission antenna.

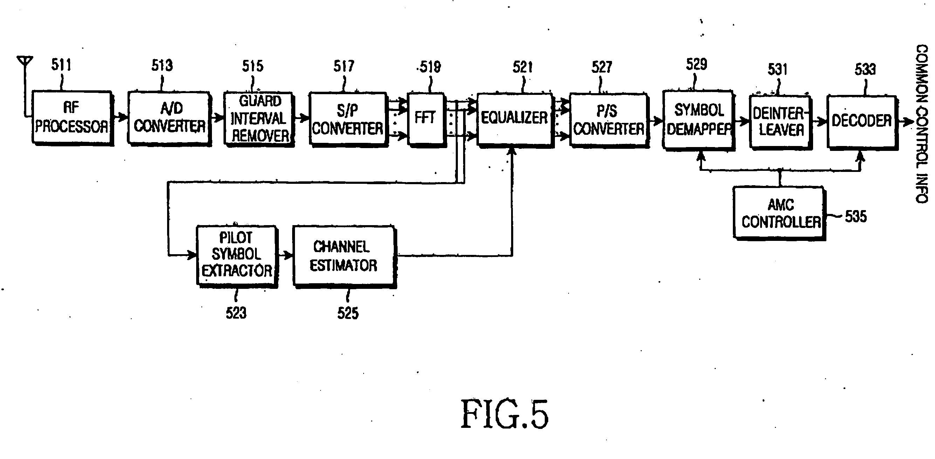

FIG. 5 is a diagram schematically illustrating a receiver in the IEEE 802.16a communication system according to the present invention. Referring to FIG. 5, the receiver, or a subscriber station, includes an RF processor 511, an analog-to-digital (A/D) converter 513, a guard interval remover 515, a serial-to-parallel (S/P) converter 517, a fast Fourier transform (FFT) unit 519, an equalizer 521, a pilot symbol extractor 523, a channel estimator 525, a parallel-to-serial (P/S) converter 527, a symbol demapper 529, a deinterleaver 531, a decoder 533, and an AMC controller 535.

A signal transmitted by the transmitter, or the base station, in the IEEE 802.16a communication system described with reference to FIG. 4, is received via a reception antenna of the receiver, the received signal experiencing a multipath channel and having a noise component. The signal received via the reception antenna is input to the RF processor 511, which down-converts the signal received via the reception antenna into an intermediate frequency (IF) signal and outputs the IF signal to the analog-to-digital converter 513. The analog-to-digital converter 513 digital-converts an analog signal output from the RF processor 511, and outputs the digital-converted signal to the guard interval remover 515.

The guard interval remover 515 removes a guard interval signal from the digital-converted signal output from the analog-to-digital converter 513, and outputs the guard interval-removed signal to the serial-to-parallel converter 517. The serial-to-parallel converter 517 parallel-converts the serial signal output from the guard interval remover 515, and outputs the parallel-converted signal to the FFT unit 519. The FFT unit 519 performs N-point FFT on the signal output from the serial-to-parallel converter 517, and outputs the FFT-processed signal to the equalizer 521 and the pilot symbol extractor 523. The equalizer 521 channel-equalizes the signal output from the FFT unit 519, and outputs the channel-equalized signal to the parallel-to-serial converter 527. The parallel-to-serial converter 527 serial-converts the parallel signal output from the equalizer 521, and outputs the serial-converted signal to the symbol demapper 529.

The FFT-processed signal output from the IFFT unit 519 is input to the pilot symbol extractor 523, and the pilot symbol extractor 523 extracts pilot symbols from the FFT-processed signal output from the FFT unit 519, and outputs the extracted pilot symbols to the channel estimator 525. The channel estimator 525 performs channel estimation on the extracted pilot symbols output from the pilot symbol extractor 523, and outputs the channel estimation result to the equalizer 521. The subscriber station generates channel quality information (CQI) corresponding to the channel estimation result from the channel estimator 525, and transmits the generated CQI to the base station through a CQI transmitter (not shown).

The symbol demapper 529 demodulates the signal output from the parallel-to-serial converter 527 using a demodulation scheme corresponding to the modulation scheme used in the base station, and outputs the demodulated signal to the deinterleaver 531. Information on the modulation scheme used in the base station is provided from the AMC controller 535, and although not illustrated in FIG. 5, the AMC controller 535 is provided with separate information on the modulation scheme from the base station. The deinterleaver 531 deinterleaves the signal output from the symbol demapper 529 using a deinterleaving scheme corresponding to the interleaving scheme used in the base station, and outputs the deinterleaved signal to the decoder 533.

The decoder 533 decodes the deinterleaved signal output from the deinterleaver 531 using a decoding scheme corresponding to the coding scheme used in the base station, and outputs the decoded signal as common control information transmitted by the transmitter. Also, information on the coding scheme used in the base station is provided from the AMC controller 535, and although not illustrated in FIG. 5, the AMC controller 535 is provided with separate information on the coding scheme from the base station.

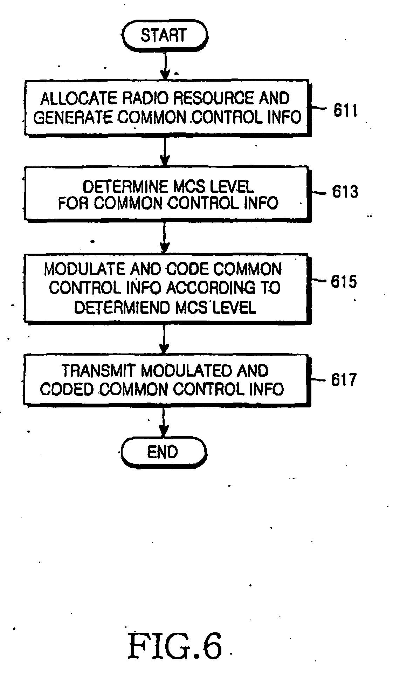

FIG. 6 is a flowchart illustrating a process of transmitting common control information in the IEEE 802.16a communication system according to the present invention. Referring to FIG. 6, in step 611, a transmitter, or a base station, of the IEEE 802.16a communication system allocates downlink and uplink resources for a receiver, or a subscriber station, of the IEEE 802.16a communication system, and generates common control information according to the allocated downlink and uplink resources. In step 613, the base station selects an MCS level to be used for the common control information. Herein, in selecting the MCS level for the common control information, the base station selects the most robust MCS level for the information that all subscriber stations should receive, in the common control information, and selects an MCS level which is lower by 1 level than an MCS level corresponding to a channel state of a corresponding subscriber station for the information that only the corresponding subscriber station should receive, in the common control information.

More specifically, in the second embodiment of the present invention, the base station includes decoding information for normally decoding the information that only the corresponding subscriber station should receive, i.e., radio resource allocation information, in the common control information, because the radio resource allocation information blocks are coded with different MCS levels.

In step 615, the base station modulates and codes the common control information according to the selected MCS level, and then proceeds to step 617. In step 617, the base station transmits the modulated coded common control information to subscriber stations through a downlink, and then ends the process.

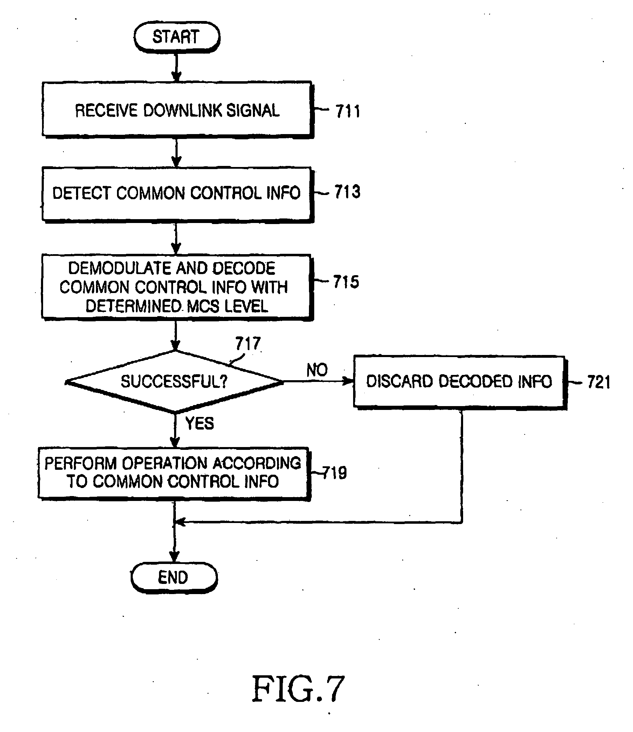

FIG. 7 is a flowchart illustrating a process of receiving common control information in the IEEE 802.16a communication system according to the present invention. Referring to FIG. 7, in step 711, a receiver, or a subscriber station, of the IEEE 802.16a communication system receives a downlink signal. In step 713, the subscriber station detects common control information by multiplexing the received downlink signal. More specifically, in the second embodiment of the present invention, decoding information for decoding radio resource allocation information is included in the common control information.

In step 715, the subscriber station demodulates and decodes the detected common control information according to an MCS level used in a base station. More specifically, in the second embodiment of the present invention, the subscriber station demodulates and decodes the detected common control information according to an MCS level used in the base station by a corresponding size in the location of radio resource allocation information that the subscriber station itself should decode according to the decoding information. In this case, the subscriber station can decode the radio resource allocation information at higher reliability.

In step 717, the subscriber station determines if decoding on the common control information is successful. If it is determined that decoding on the common control information is successful, in step 719, the subscriber station performs an operation corresponding to the common control information, i.e., a data reception operation through a radio resource field corresponding to radio resource information included in the common control information, and then ends the process. However, if it is determined in step 717 that decoding on the common control information is not successful,in step 721, the subscriber station discards the decoded information, and ends the process.

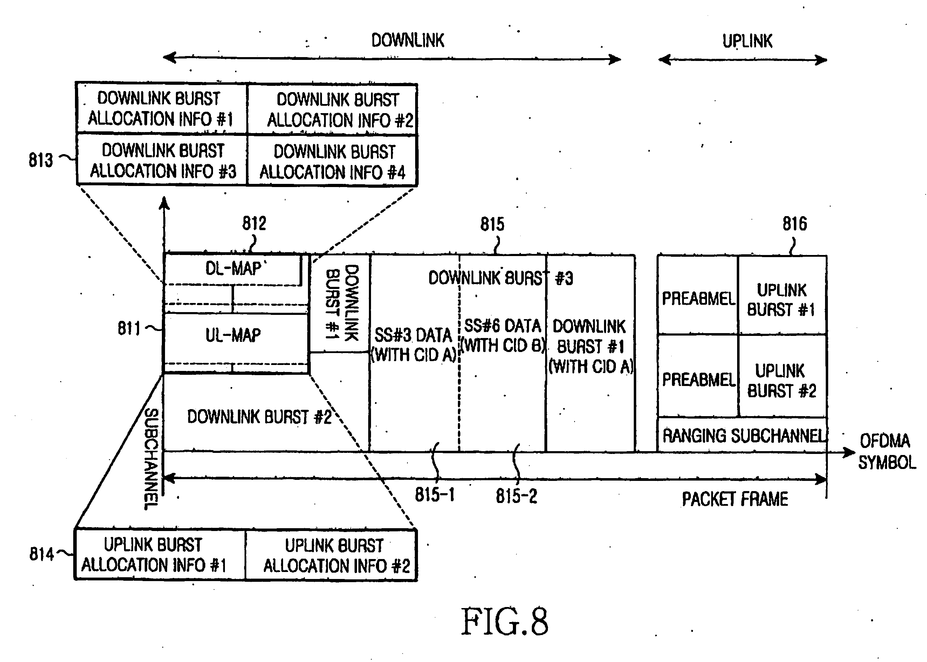

FIG. 8 is a diagram illustrating a frame format for the IEEE 802.16a communication system according to the first embodiment of the present invention. Referring to FIG. 8, a horizontal axis represents an OFDMA symbol number, and a vertical axis represents a subchannel number. As illustrated in FIG. 8, one OFDMA frame includes a plurality of, for example, 8 OFDMA symbols. One OFDMA symbol includes a plurality of, for example, N subcarrier signals. Herein, the term "subchannel" refers to a channel including a predetermined number of subcarriers. In addition, as described above, the common control information includes a DL_MAP message and a UL_MAP message, or an HARQ_MAP message, and it will be assumed in FIG. 8 that the common control information includes the DL_MAP message and the UL_MAP message.

In addition, FIG. 8 illustrates two cases, i.e., a first case in which the base station 100 transmits common control information and user data to the third subscriber station 130 having a 'normal' channel state and the third subscriber station 130 receives the common control information and the user data, and a second case where the base station 100 transmits common control information to the first subscriber station 110 having a 'best' channel state and the first subscriber station 110 transmits user data over an uplink.

The base station 100 allocates user data 815-1 of the third subscriber station 130 including a CID A and user data 815-2 of the sixth subscriber station including a CID B, both the third and sixth subscriber stations using the same QoS (Quality-of-Service) level and the same MCS level, to a third downlink burst 815. In the same method, the base station 100 allocates user data and CID of a corresponding subscriber station for each downlink burst needed in one OFDMA frame within an MCS level supported in the IEEE 802.16a communication system.

In addition, the base station 100 maps offset information in units of symbols or subcarrier frequency allocation capable of distinguishing a downlink burst transmitted to the third subscriber station 130, i.e., an MCS level and position information to be used for the third downlink burst 815, to third downlink burst allocation information 813 in the DL_MAP message 812, which is common control information.

Although not separately illustrated in FIG. 8, in the second embodiment of the present invention, the common control information includes decoding information for decoding radio resource allocation information, i.e., an MCS level and location and size information of radio resource allocation information corresponding to the MCS level. Thereafter, the base station 100 codes and modulates the DL_MAP message 812 and downlink bursts using the corresponding MCS level, and transmits the results to subscriber stations.

The third subscriber station 130 receives a downlink signal and detects common control information from the received downlink signal. That is, the third subscriber station 130 detects the information that all subscriber stations should receive, i.e., PHY Synchronization, DCD Count, Base Station ID, and Number of DL_MAP Elements n, from the DL_MAP message described in connection with Table 2, by applying the most robust MCS level to the detected common control information. Thereafter, the third subscriber station 130 demodulates and decodes the detected common control information using an MCS level, which is 1 level lower than an MCS level corresponding to a channel state of the third subscriber station 130, in order to acquire downlink burst allocation information for the downlink bursts.

More specifically, the third subscriber station 130 decodes first downlink burst allocation information using an MCS level, which is lower by 1 level than an MCS level corresponding to its channel state. However, the third subscriber station 130 fails in decoding due to a difference of the MCS level used for the first downlink burst allocation information, such that it discards the corresponding information. Accordingly, the third subscriber station 130 decodes second downlink burst allocation information, third downlink burst allocation information 813, and fourth downlink burst allocation information. Because only the third downlink burst allocation information 813 uses the same MCS level, only the third downlink burst allocation information 813 is normally decoded. Therefore, the third subscriber station 130 accesses a downlink burst corresponding to the third downlink burst allocation information 813, i.e., the third downlink burst 815, and demodulates user data using the same MCS level as an MCS level corresponding to its channel state.

Although not illustrated in FIG. 8, in the second embodiment of the present invention, the third subscriber station 130 detects decoding information for decoding the third downlink burst allocation information 813 representing a location of the third downlink burst 815 from the common control information, and detects location and size of downlink burst allocation information having an MCS level applied thereto. Therefore, the third subscriber station 130 decodes the third downlink burst allocation information 813 with reliability according to the decoding information. That is, the third subscriber station 130 detects the same MCS level as its own MCS level from the decoding information, and decodes information on the corresponding location using the detected MCS level. Accordingly, the third subscriber station 130 normally decodes the third downlink burst allocation information 813.

Further, in demodulating the user data, the third subscriber station 130 should refer to its own CID, i.e., CID A.

Uplink burst allocation information can be detected in the method used in detecting the downlink burst allocation information. More specifically, the base station 100 allocates a first uplink burst 816 to the first subscriber station 110 in order to transmit user data to the first subscriber station 110 over an uplink. That is, the base station 100 maps offset information in units of symbol or subcarrier frequency allocation capable of distinguishing an MCS level and position information of the first uplink burst 816, i.e., the uplink burst, together with a CID C of the first subscriber station 110, to the UL_MAP message 811. Thereafter, the base station 100 codes and modulates the UL_MAP message 811 using a corresponding MCS level, and transmits the modulated UL_MAP message to subscriber stations.

Therefore, the first subscriber station 110 receives a downlink signal, and detects common control information from the received downlink signal. That is, the first subscriber station 110 detects the information that all subscriber stations should receive, i.e., Uplink Channel ID, UCD Count, Allocation Start Time, and Number of UL_MAP Elements n, from the UL_MAP message 811 described in connection with Table 3, by applying the most robust MCS level to the detected common control information.

Although not illustrated in FIG. 8, in the second embodiment of the present invention, the common control information includes the decoding information, i.e., an MCS level and location and size information for each of uplink burst allocation information corresponding to the MCS level. Thereafter, the first subscriber station 110 demodulates and decodes the detected common control information using an MCS level, which is lower by 1 level than an MCS level corresponding to a channel state of the first subscriber station 110, in order to acquire uplink burst allocation information for the uplink bursts.

More specifically, the first subscriber station 110 decodes first uplink burst allocation information 814 using an MCS level, which is lower by 1 level than an MCS level corresponding to its channel state. Because the MCS level applied to the first uplink burst allocation information 814 is identical to the MCS level, which is lower by 1 level than the MCS level corresponding to a channel state of the first subscriber station 110, the first subscriber station 110 can normally decode the first uplink burst allocation information. Therefore, the first subscriber station 110 can use an uplink burst according to the first uplink burst allocation information 814, i.e., the first uplink burst 816.

Although not illustrated in FIG. 8, in the second embodiment of the present invention, the first subscriber station 110 detects decoding information for decoding the first uplink burst allocation information 814 representing a location of the first uplink burst 816 from the common control information, and decodes uplink burst allocation information having an MCS level for the first subscriber station 110, i.e., the first uplink burst allocation information 814, according to the decoding information.

As can be understood from the forgoing description, the wireless communication system of the present invention classifies common control information into the information that all subscriber stations should receive in common and the information that only particular subscriber stations should receive, and transmits the classified information using different MCS levels, thereby maximizing efficiency of radio resources. As a result, the amount of radio resources used for transmission of common control information is minimized, and spare radio resources secured by the minimization are used for transmitting other data, thereby improving performance of the wireless communication system.

## Claims

1. A method for transmitting common control information messages from a base station to a plurality of subscriber stations located in a coverage area of the base station in a wireless communication system, comprising the steps of:
transmitting a first common control information message (311) that is commonly transmitted in common to all of the plurality of subscriber stations; and
transmitting a plurality of second common control information messages (321, 323, 325, 327) that are individually transmitted to a plurality of groups,
wherein the plurality of groups are generated by classifying the plurality of subscriber stations into the plurality of groups using channel states thereof, a second common control information message (321) with lower coding rate and modulation order than other second common control information messages (323, 325, 327) is placed before the other second common control information messages (323, 325, 327), and a different modulation order and a different coding rate is applied to each of the plurality of second common control information messages.

2. The method of claim 1, wherein each of the plurality of the second common control information messages includes a description of a location and coding and modulation scheme for each of the plurality of groups.

3. The method of claim 1, wherein when a combination of a modulation order and a coding rate is a Modulation and Coding Scheme, MCS, level, each of MCS levels applied to each of the plurality of second common control information messages is adjusted by a predetermined level from an MCS level corresponding to the channel state each of the plurality of groups.

4. The method of claim 3, wherein each of the adjusted MCS levels is identical to each of MCS levels corresponding to channel states of the plurality of groups or each of MCS levels having modulation schemes with a lower order than that of modulation schemes of the MCS levels corresponding to the channel states of the plurality of groups, and having coding schemes with lower coding rates than coding schemes of the MCS levels corresponding to channel states of the plurality of groups.

5. The method of claim 1, wherein when a combination of a modulation order and a coding rate is a Modulation and Coding Scheme, MCS, level, an MCS level is applied to the first common control information message is identical to an MCS level having a modulation scheme with a lowest order and a coding scheme with a lowest coding rate among all MCS levels available in the base station or an MCS level corresponding to a channel state of a subscriber station having a worst channel state among the plurality of subscriber stations.

6. An apparatus for transmitting common control information messages in a wireless communication, comprising:
a plurality of subscriber stations (110, 120, 130, 140, 150); and
a base station (100) for transmitting a first common control information message (311) that is commonly transmitted in common to all of the plurality of subscriber stations, and transmitting a plurality of second common control information message (321, 323, 325, 327) that are individually transmitted to a plurality of groups,
the apparatus being configured such that the plurality of groups are generated by classifying the plurality of subscriber stations into the plurality of groups using channel states thereof, a second common control information message (321) with lower coding rate and modulation order than other second common control information messages is placed before the other second common control information messages (323, 325, 327), and a different modulation order and a different coding rate is applied to each of the plurality of second common control information messages.

7. The apparatus of claim 6, wherein each of the plurality of the second common control information messages includes a description of a location and coding and modulation scheme for each of the plurality of groups.

8. The apparatus of claim 6, wherein when a combination of a modulation order and a coding rate is a Modulation and Coding Scheme, MCS, level, each of MCS levels applied to each of the plurality of second common control information messages is adjusted by a predetermined level from an MCS level corresponding to the channel state each of the plurality of groups

9. The apparatus of claim 8, wherein each of the adjusted MCS levels is identical to each of MCS levels corresponding to channel states of the plurality of groups or each of MCS levels having modulation schemes with a lower order than that of modulation schemes of the MCS levels corresponding to the channel states of the plurality of groups, and having coding schemes with lower coding rates than coding schemes of the MCS levels corresponding to channel states of the plurality of groups.

10. The apparatus of claim 6, wherein when a combination of a modulation order and a coding rate is a Modulation and Coding Scheme, MCS, level, an MCS level is applied to the first common control information message is identical to an MCS level having a modulation scheme with a lowest order and a coding scheme with a lowest coding rate among all MCS levels available in the base station, or an MCS level corresponding to a channel state of a subscriber station having a worst channel state among the plurality of subscriber stations.

11. A method for receiving common control information messages transmitted from a base station to a plurality of subscriber stations located in a coverage area of the base station in a wireless communication, comprising the steps of:
receiving, from the base station, a first common control information message (311) that is commonly transmitted, in the base station, in common to all of the plurality of subscriber stations; and
receiving, from the base station, a plurality of second common control information messages (321, 323, 325, 327) that are individually transmitted, in the base station, to a plurality of groups,
wherein the plurality of groups are generated, in the base station, by classifying the plurality of subscriber stations into the plurality of groups using channel states thereof, a second common control information message (321) with lower coding rate and modulation order than other second common control information messages is placed before the other second common control information messages (323, 325, 327), and a different modulation order and a different coding rate is applied to each of the plurality of second common control information messages.

12. The method of claim 11, wherein each of the plurality of the second common control information messages includes a description of a location and coding and modulation scheme for each of the plurality of groups.

13. The method of claim 11, wherein when a combination of a modulation order and a coding rate is a Modulation and Coding Scheme, MCS, level, each of MCS levels applied to each of the plurality of second common control information messages is adjusted by a predetermined level from an MCS level corresponding to the channel state each of the plurality of groups.

14. The method of claim 13, wherein each of the adjusted MCS levels is identical to each of MCS levels corresponding to channel states of the plurality of groups or each of MCS levels having modulation schemes with a lower order than that of modulation schemes of the MCS levels corresponding to the channel states of the plurality of groups, and having coding schemes with lower coding rates than coding schemes of the MCS levels corresponding to channel states of the plurality of groups.

15. The method of claim 11, wherein when a combination of a modulation order and a coding rate is a Modulation and Coding Scheme, MCS, level, an MCS level is applied to the first common control information message is identical to an MCS level having a modulation scheme with a lowest order and a coding scheme with a lowest coding rate among all MCS levels available in the base station, or an MCS level corresponding to a channel state of a subscriber station having a worst channel state among the plurality of subscriber stations..

16. An apparatus for receiving common control information messages in a wireless communication, comprising:
a base station (100); and
a plurality of subscriber stations (110, 120, 130, 140, 150) for receiving, from the base station, a first common control information message (311) that is commonly transmitted, in the base station, in common to all of the plurality of subscriber stations, and receiving, from the base station, a plurality of second common control information messages (321, 323, 325, 327) that are individually transmitted, in the base station, to a plurality of groups,
the apparatus being configured such that the plurality of groups are generated, in the base station, by classifying the plurality of subscriber stations into the plurality of groups using channel states thereof, a second common control information message (321) with lower coding rate and modulation order than other second common control information messages is placed before the other second common control information messages (323, 325, 327), and a different modulation order and a different coding rate is applied to each of the plurality of second common control information messages.

17. The apparatus of claim 16, wherein each of the plurality of the second common control information messages includes a description of a location and coding and modulation scheme for each of the plurality of groups.

18. The apparatus of claim 16, wherein when a combination of a modulation order and a coding rate is a Modulation and Coding Scheme, MCS, level, each of MCS levels applied to each of the plurality of second common control information messages is adjusted by a predetermined level from an MCS level corresponding to the channel state each of the plurality of groups..

19. The apparatus of claim 18, wherein each of the adjusted MCS levels is identical to each of MCS levels corresponding to channel states of the plurality of groups or each of MCS levels having modulation schemes with a lower order than that of modulation schemes of the MCS levels corresponding to the channel states of the plurality of groups, and having coding schemes with lower coding rates than coding schemes of the MCS levels corresponding to channel states of the plurality of groups.

20. The apparatus of claim 16, wherein when a combination of a modulation order and a coding rate is a Modulation and Coding Scheme, MCS, level, an MCS level is applied to the first common control information message is identical to an MCS level having a modulation scheme with a lowest order and a coding scheme with a lowest coding rate among all MCS levels available in the base station, or an MCS level corresponding to a channel state of a subscriber station having a worst channel state among the plurality of subscriber stations.

## Patentansprüche

1. Verfahren zum Senden von Nachrichten mit gemeinsamen Steuerinformationen von einer Basisstation zu einer Vielzahl von Teilnehmerstationen, die sich in einem Versorgungsbereich der Basisstation in einem Drahtlos-Kommunikationssystem befinden, wobei das Verfahren die folgenden Schritte umfasst:
Senden einer ersten Nachricht (311) mit gemeinsamen Steuerinformationen, die gemeinsam zu allen der Vielzahl von Teilnehmerstationen zusammen gesendet wird; und
Senden einer Vielzahl zweiter Nachrichten mit gemeinsamen Steuerinformationen (321, 323, 325, 327), die einzeln zu einer Vielzahl von Gruppen gesendet werden,
wobei die Vielzahl von Gruppen erzeugt werden, indem die Vielzahl von Teilnehmerstationen unter Verwendung von Kanalzuständen derselben in die Vielzahl von Gruppen eingeteilt werden, eine zweite Nachricht (321) mit gemeinsamen Steuerinformationen mit einer niedrigeren Codierrate und Modulationsordnung als andere zweite Nachrichten (323, 325, 327) mit gemeinsamen Steuerinformationen vor die anderen zweiten Nachrichten (323, 325, 327) mit gemeinsamen Steuerinformationen gesetzt werden und auf jede der Vielzahl zweiter Nachrichten mit gemeinsamen Steuerinformationen eine andere Modulationsordnung und eine andere Codierrate angewendet werden.

2. Verfahren nach Anspruch 1, wobei jede der Vielzahl zweiter Nachrichten mit gemeinsamen Steuerinformationen eine Beschreibung eines Standorts sowie ein Codier- und Modulations-Schema für jede der Vielzahl von Gruppen enthält.

3. Verfahren nach Anspruch 1, wobei, wenn eine Kombination einer Modulationsordnung und einer Codierrate ein MCS-Pegel (Modulation and Coding Scheme level) ist, jeder der MCS-Pegel, der auf jede der Vielzahl zweiter Nachrichten mit gemeinsamen Steuerinformationen angewendet wird, um einen vorgegebenen Pegel gegenüber einem MCS-Pegel reguliert wird, der dem Kanalzustand jeder der Vielzahl von Gruppen entspricht.

4. Verfahren nach Anspruch 3, wobei jeder der regulierten MCS-Pegel identisch mit jedem von MCS-Pegeln, die Kanalzuständen der Vielzahl von Gruppen entsprechen, oder jedem von MCS-Pegeln ist, die Modulationsschemata mit einer niedrigeren Ordnung als die von Modulationsschemata der MCS-Pegel haben, die den Kanalzuständen als Vielzahl von Gruppen entsprechen, und Codierschemata mit niedrigeren Codierraten als Codierschemata der MCS-Pegel haben, die Kanalzuständen der Vielzahl von Gruppen entsprechen.

5. Verfahren nach Anspruch 1, wobei, wenn eine Kombination einer Modulationsordnung und einer Codierrate ein MCS-Pegel ist (Modulation and Coding Scheme level), ein MCS-Pegel, der auf die erste Nachricht mit gemeinsamen Steuerinformationen angewendet wird, identisch mit einem MCS-Pegel, der von allen in der Basisstation verfügbaren MCS-Pegeln ein Modulationsschema mit einer niedrigsten Ordnung und ein Codierschema mit einer niedrigsten Codierrate hat, oder einem MCS-Pegel ist, der einem Kanalzustand einer Teilnehmerstation entspricht, die von der Vielzahl von Teilnehmerstationen einen schlechtesten Kanalzustand hat.

6. Vorrichtung zum Senden von Nachricht mit gemeinsamen Steuerinformationen in einer Drahtlos-Kommunikation, wobei die Vorrichtung umfasst:
eine Vielzahl von Teilnehmerstationen (110, 120, 130, 140, 150); und
eine Basisstation (100) zum Senden einer ersten Nachricht (311) mit gemeinsamen Steuerinformationen, die gemeinsam zu allen der Vielzahl von Teilnehmerstationen zusammen gesendet wird, und zum Senden einer Vielzahl zweiter Nachrichten (321, 323, 325, 327) mit gemeinsamen Steuerinformationen, die einzeln zu einer Vielzahl von Gruppen gesendet werden,
wobei die Vorrichtung so konfiguriert ist, dass die Vielzahl von Gruppen erzeugt werden, indem die Vielzahl von Teilnehmerstationen unter Verwendung von Kanalzuständen derselben in die Vielzahl von Gruppen eingeteilt werden, eine zweite Nachricht (321) mit gemeinsamen Steuerinformationen mit einer niedrigeren Codierrate und Modulationsordnung als andere zweite Nachrichten (323, 325, 327) mit gemeinsamen Steuerinformationen vor die anderen zweiten Nachrichten (323, 325, 327) mit gemeinsamen Steuerinformationen gesetzt werden und auf jede der Vielzahl zweiter Nachrichten mit gemeinsamen Steuerinformationen eine andere Modulationsordnung und eine andere Codierrate angewendet werden.

7. Vorrichtung nach Anspruch 6, wobei jede der Vielzahl zweiter Nachrichten mit gemeinsamen Steuerinformationen eine Beschreibung eines Standorts sowie ein Codier- und Modulations-Schema für jede der Vielzahl von Gruppen enthält.

8. Vorrichtung nach Anspruch 6, wobei, wenn eine Kombination einer Modulationsordnung und einer Codierrate ein MCS-Pegel (Modulation and Coding Scheme level) ist, jeder der MCS-Pegel, der auf jede der Vielzahl zweiter Nachrichten mit gemeinsamen Steuerinformationen angewendet wird, um einen vorgegebenen Pegel gegenüber einem MCS-Pegel reguliert wird, der dem Kanalzustand jeder der Vielzahl von Gruppen entspricht.

9. Vorrichtung nach Anspruch 8, wobei jeder der regulierten MCS-Pegel identisch mit jedem von MCS-Pegeln, die Kanalzuständen der Vielzahl von Gruppen entsprechen, oder jedem von MCS-Pegeln ist, die Modulationsschemata mit einer niedrigeren Ordnung als die von Modulationsschemata der MCS-Pegel haben, die den Kanalzuständen der Vielzahl von Gruppen entsprechen, und Codierschemata mit niedrigeren Codierraten als Codierschemata der MCS-Pegel haben, die Kanalzuständen der Vielzahl von Gruppen entsprechen.

10. Vorrichtung nach Anspruch 6, wobei, wenn eine Kombination einer Modulationsordnung und einer Codierrate ein MCS-Pegel ist (Modulation and Coding Scheme level), ein MCS-Pegel, der auf die erste Nachricht mit gemeinsamen Steuerinformationen angewendet wird, identisch mit einem MCS-Pegel, der von allen in der Basisstation verfügbaren MCS-Pegeln ein Modulationsschema mit einer niedrigsten Ordnung und ein Codierschema mit einer niedrigsten Codierrate hat, oder einem MCS-Pegel ist, der einem Kanalzustand einer Teilnehmerstation entspricht, die von der Vielzahl von Teilnehmerstationen einen schlechtesten Kanalzustand hat.

11. Verfahren zum Empfangen von Nachrichten mit gemeinsamen Steuerinformationen, die von einer Basisstation zu einer Vielzahl von Teilnehmerstationen gesendet werden, die sich in einem Versorgungsbereich der Basisstation befinden, in einer Drahtlos-Kommunikation, wobei das Verfahren die folgenden Schritte umfasst:
Empfangen einer ersten Nachricht (311) mit gemeinsamen Steuerinformationen, die gemeinsam in der Basisstation zu allen der Vielzahl von Teilnehmerstationen zusammen gesendet wird; und
Empfangen einer Vielzahl zweiter Nachrichten (321, 323, 325, 327) mit gemeinsamen Steuerinformationen von der Basisstation, die in der Basisstation einzeln zu einer Vielzahl von Gruppen gesendet werden,
wobei die Vielzahl von Gruppen in der Basisstation erzeugt werden, indem die Vielzahl von Teilnehmerstationen unter Verwendung von Kanalzuständen derselben in die Vielzahl von Gruppen eingeteilt werden, eine zweite Nachricht (321) mit gemeinsamen Steuerinformationen mit einer niedrigeren Codierrate und Modulationsordnung als andere zweite Nachrichten mit gemeinsamen Steuerinformationen vor die anderen zweiten Nachrichten (323, 325, 327) mit gemeinsamen Steuerinformationen gesetzt werden und auf jede der Vielzahl zweiter Nachrichten mit gemeinsamen Steuerinformationen eine andere Modulationsordnung und eine andere Codierrate angewendet werden.

12. Verfahren nach Anspruch 11, wobei jede der Vielzahl zweiter Nachrichten mit gemeinsamen Steuerinformationen eine Beschreibung eines Standorts sowie ein Codier- und Modulations-Schema für jede der Vielzahl von Gruppen enthält.

13. Verfahren nach Anspruch 11, wobei, wenn eine Kombination einer Modulationsordnung und einer Codierrate ein MCS-Pegel (Modulation and Coding Scheme level) ist, jeder der MCS-Pegel, der auf jede der Vielzahl zweiter Nachrichten mit gemeinsamen Steuerinformationen angewendet wird, um einen vorgegebenen Pegel gegenüber einem MCS-Pegel reguliert wird, der dem Kanalzustand jeder der Vielzahl von Gruppen entspricht.

14. Verfahren nach Anspruch 13, wobei jeder der regulierten MCS-Pegel identisch mit jedem von MCS-Pegeln, die Kanalzuständen der Vielzahl von Gruppen entsprechen, oder jedem von MCS-Pegeln ist, die Modulationsschemata mit einer niedrigeren Ordnung als die von Modulationsschemata der MCS-Pegel haben, die den Kanalzuständen der Vielzahl von Gruppen entsprechen, und Codierschemata mit niedrigeren Codierraten als Codierschemata der MCS-Pegel haben, die Kanalzuständen der Vielzahl von Gruppen entsprechen.

15. Verfahren nach Anspruch 11, wobei, wenn eine Kombination einer Modulationsordnung und einer Codierrate ein MCS-Pegel ist (Modulation and Coding Scheme level), ein MCS-Pegel, der auf die erste Nachricht mit gemeinsamen Steuerinformationen angewendet wird, identisch mit einem MCS-Pegel, der von allen in der Basisstation verfügbaren MCS-Pegeln ein Modulationsschema mit einer niedrigsten Ordnung und ein Codierschema mit einer niedrigsten Codierrate hat, oder einem MCS-Pegel ist, der einem Kanalzustand einer Teilnehmerstation entspricht, die von der Vielzahl von Teilnehmerstationen einen schlechtesten Kanalzustand hat.

16. Vorrichtung zum Empfangen von Nachrichten mit gemeinsamen Steuerinformationen in einer Drahtlos-Kommunikation, wobei die Vorrichtung umfasst:
eine Basisstation (100); und
eine Vielzahl von Teilnehmerstationen (110, 120, 130, 140, 150), mit denen von der Basisstation eine erste Nachricht (311) mit gemeinsamen Steuerinformationen empfangen wird, die in der Basisstation gemeinsam zu allen der Vielzahl von Teilnehmerstationen zusammen gesendet wird, und eine Vielzahl zweiter Nachrichten (321, 323, 325, 327) mit gemeinsamen Steuerinformationen von der Basisstation empfangen wird, die in der Basisstation einzeln zu einer Vielzahl von Gruppen gesendet werden,
wobei die Vorrichtung so konfiguriert ist, dass die Vielzahl von Gruppen in der Basisstation erzeugt werden, indem die Vielzahl von Teilnehmerstationen unter Verwendung von Kanalzuständen derselben in die Vielzahl von Gruppen eingeteilt werden, eine zweite Nachricht (321) mit gemeinsamen Steuerinformationen mit einer niedrigeren Codierrate und Modulationsordnung als andere zweite Nachrichten mit gemeinsamen Steuerinformationen vor die anderen zweiten Nachrichten (323, 325, 327) mit gemeinsamen Steuerinformationen gesetzt werden und auf jede der Vielzahl zweiter Nachrichten mit gemeinsamen Steuerinformationen eine andere Modulationsordnung und eine andere Codierrate angewendet werden.

17. Vorrichtung nach Anspruch 16, wobei jede der Vielzahl zweiter Nachrichten mit gemeinsamen Steuerinformationen eine Beschreibung eines Standorts sowie ein Codier- und Modulations-Schema für jede der Vielzahl von Gruppen enthält.

18. Vorrichtung nach Anspruch 16, wobei, wenn eine Kombination einer Modulationsordnung und einer Codierrate ein MCS-Pegel (Modulation and Coding Scheme level) ist, jeder der MCS-Pegel, der auf jede der Vielzahl zweiter Nachrichten mit gemeinsamen Steuerinformationen angewendet wird, um einen vorgegebenen Pegel gegenüber einem MCS-Pegel reguliert wird, der dem Kanalzustand jeder der Vielzahl von Gruppen entspricht.

19. Vorrichtung nach Anspruch 18, wobei jeder der regulierten MCS-Pegel identisch mit jedem von MCS-Pegeln, die Kanalzuständen der Vielzahl von Gruppen entsprechen, oder jedem von MCS-Pegeln ist, die Modulationsschemata mit einer niedrigeren Ordnung als die von Modulationsschemata der MCS-Pegel haben, die den Kanalzuständen der Vielzahl von Gruppen entsprechen, und Codierschemata mit niedrigeren Codierraten als Codierschemata der MCS-Pegel haben, die Kanalzuständen der Vielzahl von Gruppen entsprechen.

20. Vorrichtung nach Anspruch 16, wobei, wenn eine Kombination einer Modulationsordnung und einer Codierrate ein MCS-Pegel ist (Modulation and Coding Scheme level), ein MCS-Pegel, der auf die erste Nachricht mit gemeinsamen Steuerinformationen angewendet wird, identisch mit einem MCS-Pegel, der von allen in der Basisstation verfügbaren MCS-Pegeln ein Modulationsschema mit einer niedrigsten Ordnung und ein Codierschema mit einer niedrigsten Codierrate hat, oder einem MCS-Pegel ist, der einem Kanalzustand einer Teilnehmerstation entspricht, die von der Vielzahl von Teilnehmerstationen einen schlechtesten Kanalzustand hat.

## Revendications

1. Procédé permettant de transmettre des messages d'informations de commande communes à partir d'une station de base vers une pluralité de stations d'abonnés situées dans une zone de couverture de la station de base dans un système de communication sans fil, comprenant les étapes consistant à :
transmettre un premier message (311) d'informations de commande communes qui est habituellement transmis en commun à toute la pluralité de stations d'abonnés, et
transmettre une pluralité de seconds messages (321, 323, 325, 327) d'informations de commande communes qui sont transmis individuellement à une pluralité de groupes,
dans lequel la pluralité de groupes est générée en classant la pluralité de stations d'abonnés dans la pluralité de groupes en utilisant les états de leurs canaux, un second message (321) d'informations de commande communes, présentant un débit de codage et un ordre de modulation inférieurs à ceux des autres seconds messages (323, 325, 327) d'informations de commande communes, étant placé avant les autres seconds messages (323, 325, 327) d'informations de commande communes, et un ordre de modulation différent ainsi qu'un débit de codage différent étant appliqués à chacun de la pluralité de seconds messages d'informations de commande communes.

2. Procédé selon la revendication 1, dans lequel chacun de la pluralité de seconds messages d'informations de commande communes inclut la description d'un emplacement et d'un principe de codage et de modulation pour chacun de la pluralité de groupes.

3. Procédé selon la revendication 1, dans lequel, lorsqu'une combinaison d'un ordre de modulation et d'un débit de codage représente un niveau de principe de modulation et de codage, MCS, chacun des niveaux du principe MCS appliqué à chacun de la pluralité de seconds messages d'informations de commande communes est ajusté d'un niveau prédéterminé à partir d'un niveau du principe MCS correspondant à l'état des canaux de chacun de la pluralité de groupes.

4. Procédé selon la revendication 3, dans lequel chacun des niveaux du principe MCS ajustés est identique à chacun des niveaux du principe MCS correspondant aux états des canaux de la pluralité de groupes ou à chacun des niveaux du principe MCS comportant des principes de modulation présentant un ordre inférieur à celui des principes de modulation des niveaux du principe MCS correspondant aux états des canaux de la pluralité de groupes et possédant des principes de codage présentant des débits de codage inférieurs aux principes de codage des niveaux du principe MCS correspondant aux états des canaux de la pluralité de groupes.

5. Procédé selon la revendication 1, dans lequel, quand une combinaison d'un ordre de modulation et d'un débit de codage représente un niveau de principe de modulation et de codage, MCS, un niveau du principe MCS est appliqué sur le premier message d'informations de commande communes, lequel est identique à un niveau du principe MCS
possédant un principe de modulation présentant l'ordre le plus faible et un principe de codage présentant le débit de codage le plus faible parmi tous les niveaux du principe MCS disponibles dans la station de base, ou à un niveau du principe MCS correspondant à un état des canaux d'une station d'abonné présentant l'état des canaux le pire parmi la pluralité de stations d'abonnés.

6. Appareil permettant de transmettre des messages d'informations de commande communes dans une communication sans fil, comprenant :
une pluralité de stations d'abonnés (110, 120, 130, 140, 150), et
une station de base (100) permettant de transmettre un premier message (311) d'informations de commande communes qui est habituellement transmis en commun à toute la pluralité de stations d'abonnés, et de transmettre une pluralité de seconds messages (321, 323, 325, 327) d'informations de commande communes qui sont transmis individuellement à une pluralité de groupes,
l'appareil étant configuré de telle sorte que la pluralité de groupes soit générée en classant la pluralité de stations d'abonnés dans la pluralité de groupes en utilisant les états de leurs canaux, un second message d'informations de commande communes (321) présentant un débit de codage et un ordre de modulation inférieurs à ceux des autres seconds messages d'informations de commande communes étant placé avant les autres seconds messages (323, 325, 327) d'informations de commande communes, et un ordre de modulation différent ainsi qu'un débit de codage différent étant appliqués à chacun de la pluralité de seconds messages d'informations de commande communes.

7. Appareil selon la revendication 6, dans lequel chacun de la pluralité de seconds messages d'informations de commande communes inclut la description d'un emplacement et d'un principe de codage de modulation pour chacun de la pluralité de groupes.

8. Appareil selon la revendication 6, dans lequel, quand une combinaison d'un ordre de modulation et d'un débit de codage représente un niveau de principe de modulation et de codage, MCS, chacun des niveaux du principe MCS appliqué à chacun de la pluralité de seconds messages d'informations de commande communes est ajusté d'un niveau prédéterminé à partir d'un niveau du principe MCS correspondant à l'état des canaux de chacun de la pluralité de groupes.

9. Appareil selon la revendication 8, dans lequel chacun des niveaux du principe MCS ajusté est identique à chacun des niveaux du principe MCS correspondant aux états des canaux de la pluralité de groupes ou à chacun des niveaux du principe MCS comportant des principes de modulation présentant un ordre inférieur à celui des principes de modulation des niveaux du principe MCS correspondant aux états des canaux de la pluralité de groupes et possédant des principes de codage présentant des débits de codage inférieurs aux principes de codage des niveaux du principe MCS correspondant aux états des canaux de la pluralité de groupes.

10. Appareil selon la revendication 6, dans lequel, quand une combinaison d'un ordre de modulation et d'un débit de codage représente un niveau de principe de modulation et de codage, MCS, un niveau du principe MCS est appliqué sur le premier message d'informations de commande communes, lequel est identique à un niveau du principe MCS possédant un principe de modulation présentant l'ordre le plus faible et un principe de codage présentant le débit de codage le plus faible parmi tous les niveaux du principe MCS disponibles dans la station de base, ou à un niveau du principe MCS correspondant à un état des canaux d'une station d'abonné présentant l'état des canaux le pire parmi la pluralité de stations d'abonnés.

11. Procédé de réception de messages d'informations de commande communes transmis à partir d'une station de base vers une pluralité de stations d'abonnés situées dans une zone de couverture de la station de base dans un système de communication sans fil, comprenant les étapes consistant à :
recevoir, en provenance de la station de base, un premier message (311) d'informations de commande communes qui est habituellement transmis, dans la station de base, en commun à toute la pluralité de stations d'abonnés, et
recevoir, en provenance de la station de base, une pluralité de seconds messages (321, 323, 325, 327) d'informations de commande communes qui sont transmis individuellement, dans la station de base, à une pluralité de groupes,
dans lequel la pluralité de groupes est générée, dans la station de base, en classant la pluralité de stations d'abonnés dans la pluralité de groupes en utilisant les états de leurs canaux, un second message (321) d'informations de commande communes présentant un débit de codage et un ordre de modulation inférieurs à d'autres seconds messages d'informations de commande communes étant placé avant les autres seconds messages (323, 325, 327) d'informations de commande communes et un ordre de modulation des différents ainsi qu'un débit de codage différent étant appliquées à chacun de la pluralité des seconds messages d'informations de commande communes.

12. Procédé selon la revendication 11, dans lequel chacun de la pluralité de seconds messages d'informations de commande communes inclut la description d'un emplacement et d'un principe de codage de modulation pour chacun de la pluralité de groupes.

13. Procédé selon la revendication 11, dans lequel, lorsqu'une combinaison d'un ordre de modulation et d'un débit de codage représente un niveau de principe de modulation et de codage, MCS, chacun des niveaux du principe MCS appliqué à chacun de la pluralité de seconds messages d'informations de commande communes est ajusté d'un niveau prédéterminé à partir d'un niveau du principe MCS correspondant à l'état des canaux de chacun de la pluralité de groupes.

14. Procédé selon la revendication 13, dans lequel chacun des niveaux du principe MCS ajustés est identique à chacun des niveaux du principe MCS correspondant aux états des canaux de la pluralité de groupes ou à chacun des niveaux du principe MCS comportant des principes de modulation présentant un ordre inférieur à celui des principes de modulation des niveaux du principe MCS correspondant aux états des canaux de la pluralité de groupe et possédant des principes de codage présentant des débits de codage inférieurs aux principes de codage des niveaux du principe MCS correspondant aux états des canaux de la pluralité de groupes.

15. Procédé selon la revendication 11, dans lequel, quand une combinaison d'un ordre de modulation et d'un débit de codage représente un niveau de principe de modulation et de codage, MCS, un niveau du principe MCS est appliqué sur le premier message d'informations de commande communes, lequel est identique à un niveau du principe MCS possédant un principe de modulation présentant l'ordre le plus faible et un principe de codage présentant le débit de codage le plus faible parmi tous les niveaux du principe MCS disponibles dans la station de base, ou à un niveau du principe MCS correspondant à un état des canaux d'une station d'abonné présentant l'état des canaux le pire parmi la pluralité de stations d'abonnés.

16. Appareil de réception de messages d'informations de commande communes dans un système de communication sans fil, comprenant :
une station de base (100), et
une pluralité de stations d'abonnés (110, 120, 130, 140, 150) permettant de recevoir, en provenance de la station de base, un premier message (311) d'informations de commande communes qui est habituellement transmis, dans la station de base, en commun à la totalité de la pluralité de stations d'abonnés, et permettant de recevoir, en provenance de la station de base, une pluralité de seconds messages (321, 323, 325, 327) d'informations de commande communes qui sont transmis individuellement, dans la station de base, à une pluralité de groupes,
l'appareil étant configuré de telle sorte que la pluralité de groupes soit générée, dans la station de base, en classant la pluralité de stations d'abonnés dans la pluralité de groupes en utilisant les états de leurs canaux, un second message (321) d'informations de commande communes présentant un débit de codage et un ordre de modulation inférieurs à ceux des autres seconds messages d'informations de commande communes étant placé avant les autres seconds messages (323, 325, 327) d'informations de commande communes, et un ordre de modulation différent ainsi qu'un débit de codage différent étant appliqués à chacun de la pluralité de seconds messages d'informations de commande communes.

17. Appareil selon la revendication 16, dans lequel chacun de la pluralité de seconds messages d'informations de commande communes inclut la description d'un emplacement et d'un principe de codage de modulation pour chacun de la pluralité de groupes.

18. Appareil selon la revendication 16, dans lequel, quand une combinaison d'un ordre de modulation et d'un débit de codage représente un niveau de principe de modulation et de codage, MCS, chacun des niveaux du principe MCS appliqué à chacun de la pluralité de seconds messages d'informations de commande communes est ajusté d'un niveau prédéterminé à partir d'un niveau du principe MCS correspondant à l'état des canaux de chacun de la pluralité de groupes.

19. Appareil selon la revendication 18, dans lequel chacun des niveaux du principe MCS ajusté est identique à chacun des niveaux du principe MCS correspondant aux états des canaux de la pluralité de groupes ou à chacun des niveaux du principe MCS comportant des principes de modulation présentant un ordre inférieur à celui des principes de modulation des niveaux du principe MCS correspondant aux états des canaux de la pluralité de groupes et possédant des principes de codage présentant des débits de codage inférieurs aux principes de codage des niveaux du principe MCS correspondant aux états des canaux de la pluralité de groupes.

20. Appareil selon la revendication 16, dans lequel, quand une combinaison d'un ordre de modulation et d'un débit de codage représente un niveau de principe de modulation et de codage, MCS, un niveau du principe MCS est appliqué sur le premier message d'informations de commande communes, lequel est identique à un niveau du principe MCS possédant un principe de modulation présentant l'ordre le plus faible et un principe de codage présentant le débit de codage le plus faible parmi tous les niveaux du principe MCS disponibles dans la station de base, ou à un niveau du principe MCS correspondant à un état des canaux d'une station d'abonné présentant l'état des canaux le pire parmi la pluralité de stations d'abonnés.
